# EUROPÄISCHE PATENTSCHRIFT

(11) **EP 1 184 157 B1**
(45) Veröffentlichungstag und Bekanntmachung des Hinweises auf die Patenterteilung: **20.09.2006**
(21) Anmeldenummer: 01119978.3
(22) Anmeldetag: 18.08.2001
(51) Int. Cl.: B29C 69/00, B29C 51/02, B29C 65/02, B60K 15/03

(54) **Verfahren zur Herstellung von Kunststoffhohlkörpern**
Method for producing plastic hollow bodies
Procédé pour produire des corps creux en matière plastique

(30) Priorität: 28.08.2000 DE 10042121
(43) Veröffentlichungstag der Anmeldung: 06.03.2002
(73) Patentinhaber: Basell Polyolefine GmbH, 50389 Wesseling (DE)
(72) Erfinder: Rohde, Wolfgang, Dr., 67346 Speyer (DE); Boes, Dieter, 69168 Wiesloch (DE); Flosdorff, Michael, 67165 Waldsee (DE); Schnorr, Jörg, 67071 Lugwishafen (DE); Springholz, Bernhard, 67547 Worms (DE); Weinlein, Roger, Dr., 68161 Mannheim (DE); Wüst, Andreas, 64673 Zwingenberg (DE)

(56) Entgegenhaltungen:
- EP-A- 0 419 068
- DE-A- 10 010 900
- FR-A- 2 420 415
- FR-A- 2 521 064
- GB-A- 1 410 215
- US-A- 3 733 381
- US-A- 5 129 544
- US-A- 5 474 734
- PATENT ABSTRACTS OF JAPAN vol. 1997, no. 05, 30. Mai 1997 (1997-05-30) & JP 09 001640 A (SEKISUI SEIKEI KOGYO KK), 7. Januar 1997 (1997-01-07)
- PATENT ABSTRACTS OF JAPAN vol. 011, no. 120 (M-580), 15. April 1987 (1987-04-15) & JP 61 261021 A (KYORAKU CO LTD), 19. November 1986 (1986-11-19)
- PATENT ABSTRACTS OF JAPAN vol. 2000, no. 02, 29. Februar 2000 (2000-02-29) & JP 11 320663 A (TOYOTA MOTOR CORP), 24. November 1999 (1999-11-24)
- PATENT ABSTRACTS OF JAPAN vol. 008, no. 047 (M-280), 2. März 1984 (1984-03-02) & JP 58 202112 A (TOYOTA JIDOSHA KOGYO KK), 25. November 1983 (1983-11-25)
- PATENT ABSTRACTS OF JAPAN vol. 008, no. 201 (M-325), 14. September 1984 (1984-09-14) & JP 59 091025 A (KUBOTA TEKKO KK;OTHERS: 02), 25. Mai 1984 (1984-05-25)

## Beschreibung

Die vorliegende Erfindung betrifft ein Verfahren zur Herstellung von Kunststoffhohlkörpern, bei dem in einem ersten Schritt zunächst ein schlauchförmiger Hohlkörper extrudiert und zusammengelagt wird, der danach umgeformt und dann in einem nachgelagerten Schritt zu dem Hohlkörper verschweißt wird.

Ferner betrifft die vorliegende Erfindung nach dem vorgenannten Verfahren herstellbare Kunststoffhohlkörper sowie deren Verwendung beispielsweise als Kunststoffkraftstoff-behälter in Kraftfahrzeugen.

Für die Lagerung und den Transport flüssiger Gefahrstoffe sind Kunststoffhohlkörper seit langem bekannt. Insbesondere im Fahrzeugbau haben Kunststoffhohlkörper in Form von Kraftstofftanks, die früher üblichen Tanks aus metallischen Werkstoffen nahezu vollständig verdrängt. Aber auch tragbare bzw. nicht ortsfeste Behälter aller Art, beispielsweise Benzinkanister, Kunststoffflaschen, -fässer und -container für brennbare Flüssigkeiten, Gefahrstoffe und dergleichen werden heute fast ausschließlich aus Kunststoffen hergestellt. Der besondere Vorteil von Kunststoffbehältern und Tanks liegt vor allem im geringeren Gewicht-/Volumenverhältnis und der Vermeidung von Korrosionsproblemen sowie der kostengünstigen Herstellung.

Für die Herstellung von Kunststoffhohlkörpern sind verschiedene Verfahren einsetzbar. Neben dem sogenannten Rotationssintern wird vor allem das Blasformen, einschließlich Coextrusionsblasformen, in großem Maßstab in der Serienproduktion angewandt.

Aufgrund weltweit bestehender gesetzlicher Anforderungen zur Reduktion ozonbildender Emissionen, wie beispielsweise Kraftstoffemissionen müssen Kunststoffkraftstoffbehälter (KKB) in allen Fahrzeugen gegen den Austritt von Kraftstoffen im Stillstand und Betrieb gesichert sein. Sofern der zur Herstellung eines Kunststoffkraftstoffbehälters verwendete Kunststoff nicht bereits inhärente Barriereeigenschaften aufweist, müssen zusätzliche Maßnahmen zur Permeationsminderung getroffen werden.

Die häufig zur Herstellung der Kunststoffkraftstoffbehälter verwendeten Polyolefine weisen eine nur geringe Barrierewirkung gegenüber der Permeation leicht flüchtiger, unpolarer Stoffe auf. Die Sperreigenschaften von Kunststoffkraftstoffbehältern aus beispielsweise Polyethylen lassen sich unter anderem durch Fluorierung (in-line oder off-line), Lackierung bzw. Coating, Plasmapolymerisation, Blends (Selar® -Verfahren) oder Coextrusionsverfahren (Einbau diverser Sperrpolymere im Mehrschichtverbund) erheblich verbessern.

Neben dem Coextrusionsblasformen haben nur noch die Fluorierung und das Selar® -Verfahren als Barriereverfahren technische Bedeutung erlangt. Im Stand der Technik bekannte Fluorierungsverfahren sind im weitesten Sinne Beschichtungsverfahren. Ein prinzipieller Nachteil aller Beschichtungsverfahren ist, daß die Sperrschicht bzw. die Sperrschichten notwendigerweise auf der inneren und/oder äußeren Behälteroberfläche aufgetragen werden und somit den Umgebungseinflüssen ungeschützt ausgesetzt sind. So kann es mit der Zeit zu einem Ablösen oder auch zu einer chemischen Veränderung der Sperrschicht kommen, wodurch die Barriereeigenschaften signifikant beeinträchtigt werden. Die strengen gesetzlichen Anforderungen zur Langzeitstabilität der Sperrwirkung bedingen, daß in der Zukunft Beschichtungsverfahren wie etwa die Fluorierung zunehmend an Bedeutung verlieren werden. Diese Entwicklung wird zudem dadurch verstärkt, daß zur Erfüllung der gesetzlichen Anforderungen hinsichtlich der Vermeidung von Kraftstoffemissionen aus dem Kraftstoffsystem vermehrt Teile im Inneren des Tanks integriert werden müssen. Der Einbau der Teile, wie etwa Leitungen oder Ventile, kann entweder vor oder nach einem durchzuführenden Beschichtungsprozess erfolgen. Vor dem Beschichtungsprozess können Teile nur dann eingebaut werden, wenn die Einbauteile bei dem Beschichtungsverfahren nicht beschädigt werden. Erfolgt die Beschichtung vor dem Einbau etwaiger Teile, muß davon ausgegangen werden, daß an den Befestigungsstellen (Schweißstellen) im Tank die Beschichtung beschädigt wird.

Aus den vorgenannten Gründen konzentrieren sich heutige Entwicklungen auf die Herstellung und den Aufbau von Mehrschichtsystemen. Beispielsweise wird das Verfahren der Mehrschicht-Coextrusion zur Einbringung von Sperrschichten in die Behälterwand eingesetzt. Dabei werden Sperrpolymere über Haftvermittler in eine tragende Polymermatrix eingebettet. Üblicherweise befindet sich das Sperrpolymere etwa in der Mitte der Behälterwand, wodurch zum einen die bei mechanischer Belastung auftretenden Biegespannungen in den zumeist spröderen Sperrpolymeren minimiert werden und zum anderen das Sperrpolymere vor Umgebungseinflüssen - insbesondere Wasser - durch das Matrixmaterial, wie etwa Polyethylen, geschützt ist.

Ein für den Aufbau mehrschichtiger Hohlkörper verwendetes Verfahren ist das bereits erwähnte Coextrusionsblasformen. Das Blasformen bzw. das Coextrusionsblasformen ist eine verbreitete Technik, die jedoch den Nachteil aufweist, daß die Integration von Bauteilen, also beispielsweise Komponenten des Kraftstoffsystems, nach der Herstellung des Kunststoffhohlkörpers gar nicht oder nur in sehr begrenztem Umfange möglich ist.

Bei einem weiteren im Stand der Technik bekannten Herstellungsverfahren, dem sogenannten Thermoformverfahren bzw. Twin-Sheet-Verfahren werden zunächst zwei Halbschalen durch Tiefziehen entsprechender Plattenhalbzeuge gefertigt und diese in einem zweiten Verfahrensschritt miteinander verschweißt. Ein grundlegender Nachteil dieses Verfahrens besteht allerdings unter anderem in der nur bedingt kontrollierbaren Wanddickenverteilung in den Tankhalbschalen. Die Wanddickenverteilung und somit die Sperrschichtdickenverteilung lassen sich nur unzureichend kontrollieren, da die Plattenhalbzeuge eine gleichmäßige Wanddicke besitzen, so daß je nach Reckverhältnissen beim Tiefziehen die Wanddicke bzw. die Sperrschichtdicke lokal stark ausgedünnt werden kann.

Ein weiterer Prozeß zur Herstellung von mehrschichtigen Kunststoffhohlkörpern beruht auf den im Stand der Technik bekannten Spritzgußverfahren. Ein erheblicher Nachteil dieser Verfahren ist darin zu sehen, daß zum Aufbau mehrschichtiger Schalen entweder dickwandige mehrschichtige, in einem gesonderten Prozeß herzustellende Folien hinterspritzt werden oder aber dünnere Folien, die ebenso gesondert herzustellen sind, in zwei aufeinanderfolgenden Schritten beidseitig hinterspritzt werden. In jedem Falle sind daher prinzipiell mehrere Prozeßschritte, ein erheblicher apparativer Aufwand und somit ein hoher Kostenaufwand für das Herstellen mehrschichtiger Kunststoffhohlkörper erforderlich.

In der nächstkommenden DE 198 14 314 wird ein sogenanntes Schmelzpreßverfahren beschrieben. Hierbei wird ein coextrudierter Vorformling, beispielsweise als Schlauch aus einer Blasformanlage, in ein Werkzeug eingelegt und mit einem Stempel oder Negativwerkzeug zu einer Halbschale verpreßt. Nachteilig ist, daß vor dem Verschweißen die Entformung des Stempels erfolgen muß und somit ein Verschweißen aus der Wärme nicht möglich ist. Darüber hinaus tritt beim Verpressen eine starke Schmelzquetschströmung parallel zur Werkzeugoberfläche auf, wodurch zwar die Gesamtwanddicke gut über die geometrischen Maße von Werkzeug und Stempel festgelegt werden kann, jedoch die zumeist leicht fließende Schmelze der Sperrpolymere örtlich ausgedünnt werden kann. Dies wiederum bewirkt eine über den Kunststoffhohlkörper ungleichmäßige Barrierewirkung.

Die vorhergehenden Ausführungen zeigen, daß die im Stand der Technik bekannten Verfahren zur Herstellung von Kunststoffhohlkörpern eine Reihe gravierender Nachteile aufweisen. Es besteht daher ein starkes Bedürfnis, ein Verfahren zur Herstellung von Kunststoffhohlkörpern zur Verfügung zu stellen, welches die vorgenannten Nachteile des Standes der Technik vermeidet. Der vorliegenden Erfindung lag außerdem die Aufgabe zugrunde, ein Verfahren zu entwickeln, bei dem die bereits existierenden und in der Industrie weit verbreiteten Coextrusionsblasformanlagen bzw. Blasformanlagen weiterhin Verwendung finden.

Weitere Aufgaben ergeben sich aus der nachfolgenden Beschreibung der Erfindung.

Die Lösung der verfahrensbezogenen Aufgaben liegt in den Merkmalen des Anspruches 1.

Vorteilhafte Ausgestaltungen des erfindungsgemäßen Verfahrens sind in den Verfahrensunteransprüchen definiert.

Erfindungsgemäß wird ein Verfahren zur Herstellung von Kunststoffhohlkörpern bereitgestellt, welches die folgenden Schritte umfaßt:
a) Herstellen eines schlauchförmigen Kunststoffvorformlings in einer Blasform- oder Coextrusionsblasformanlage, wobei eine gezielte Wanddickensteuerung des Kunststoffvorformlings vorgenommen wird,
b) Aufschneiden des extrudierten oder coextrudierten Kunststoffvorformlings zu wenigstens zwei flächigen Halbzeugen,
c) Tiefziehen der erhaltenen flächigen Halbzeuge zu Halbschalen,
d) Verschweißen der thermogeformten Halbschalen zu einem Hohlkörper, wobei das Verschweißen der thermogeformten Halbschalen aus der Tiefziehwärme erfolgt.

Es wurde gefunden, daß für das erfindungsgemäße Verfahren zur Herstellung von Kunststoffhohlkörpern die Nachteile der im Stand der Technik bekannten Verfahren vermieden werden. Das Prinzip des erfindungsgemäßen Verfahrens zur Herstellung von Kunststoffhohlkörpern besteht darin, daß ein in einer Blasform- oder Coextrusionsblasformanlage hergestellter Kunststoffvorformling in axialer Richtung aufgeschnitten wird und die so erhaltenen schmelzeförmigen, flächigen Plattenhalbzeuge in zwei Tiefziehwerkzeuge eingelegt und zu der gewünschten Form umgeformt werden. Auf diese Weise werden zwei Halbschalen erhalten, die anschließend aus der Tiefziehwärme miteinander verschweißt werden können. Die Herstellung der flächigen Halbzeuge über eine Blasformanlage erlaubt eine gezielte und reproduzierbare Wanddickensteuerung und somit eine hohe Gestaltungsfreiheit. Bei Verwendung einer Coextrusionsblasformanlage lassen sich Schichten aus Barrierepolymeren in das Halbzeug integrieren. Wird das Halbzeug einschichtig auf einer Blasformanlage gefertigt, so lassen sich nachträglich Barriereschichten aufbringen, beispielsweise durch Fluorierung oder Lakkierung. Diese Beschichtungen werden vorzugsweise nach dem Zusammenschweißen der Halbschalen aufgebracht. Jedoch können die Beschichtungsvorgänge auch vor dem Verschweißen gegebenenfalls vor oder nach der Anbringung von Einbauteilen an den Halbschalen erfolgen.

Ein weiterer Gegenstand der vorliegenden Erfindung ist ein Kunststoffhohlkörper, welcher nach dem vorbeschriebenen Verfahren herstellbar ist. Es ist erfindungsgemäß vorgesehen, daß die nach dem erfindungsgemäßen Verfahren hergestellten Kunststoffhohlkörper vorzugsweise als Kunststoffkraftstoffbehälter in Kraftfahrzeugen, aber auch als Benzinkanister, Kunststofftanks zur Lagerung und zum Transport von Heizöl, Diesel und dergleichen, Transportbehälter auf Nutzfahrzeugen, beispielsweise für landwirtschaftliche Spritzmittel, Lösungsmittelbehälter, Kunststoffflaschen und dergleichen verwendet werden.

Ein weiterer Vorteil des Herstellungsverfahrens gemäß der vorliegenden Erfindung liegt darin, daß vor dem Verschweißen der tiefgezogenen Halbzeuge gegebenenfalls Einbauten, wie etwa beispielsweise Komponenten eines Kraftstoffsystems, problemlos auf der Innenseite der Halbschalen angebracht werden können. Es ist daher erfindungsgemäß vorgesehen, daß vor dem Verschweißen der thermogeformten Halbzeuge Einbauteile, wie etwa Lüftungsleitungen für den Druckausgleich innerhalb des Tanks, Kraftstoffleitungen für den Flüssigkeitsausgleich innerhalb der des Tanks, Ventile, Schwalltöpfe, Pumpen- und/oder Tankgebermodule, an der Innenseite der Halbschalen angebracht werden.

Das Verschweißen der thermogeformten Halbzeuge geschieht vorzugsweise aus der Tiefziehwärme, d.h. die nach dem Thermoformen schmelzeheißen Halbschalen werden direkt miteinander verschweißt. Bei dem erfindungsgemäßen Verfahren erfolgt vorteilhafterweise vor dem Verschweißen der beiden Halbzeuge keine Abkühlung beziehungsweise Entformung oder Nachbearbeitung. In einer besonders bevorzugten Ausführungsform des Verfahrens sind zur Herstellung des Kunststoffhohlkörpers aus dem schmelzeheißen (co)extrudierten schlauchförmigen Vorformling keine zusätzlichen Aufheiz- oder Abkühlschritte notwendig.

Ein weiterer wesentlicher Vorteil des erfindungsgemäßen Verfahrens besteht darin, daß die Wanddicke des Kunststoffvorformlings in der verwendeten Coextrusionsblasformanlage gezielt reguliert werden kann. Die präzise Regulierung der Wanddicke des Vorformlings in der Coextrusionsblasformanlage führt zu einer signifikanten Verbesserung der Wanddickensteuerung bei dem anschließenden Tiefziehprozess. Der Durchmesser bzw. der Umfang des Kunststoffvorformlings wird über den Düsendurchmesser des Extrusionsblaskopfes festgelegt und ist den Erfordernissen der nachfolgenden Verfahrensschritte anzupassen. Die Wanddicke des Kunststoffvorformlings kann bei der Extrusion mit Hilfe des variablen Düsenspalts in axialer Richtung reguliert werden. Bei Verwendung profilierter Düsen/Dorn-Paare oder flexibler Düsenringe, die mit geeigneten Stellelementen deformiert werden können (partielle Wanddickensteuerung) läßt sich auch eine radiale Wanddickensteuerung realisieren.

Nach der Extrusion des Kunststoffvorformlings bis zu einer gewünschten Länge, die gegebenenfalls den Erfordernissen der nachfolgenden Verfahrensschritte und der Fertigteilgeometrie anzupassen ist, wird der Vorformling aufgeschnitten, so daß man erfindüngsgemäß wenigstens zwei, oder auch mehrere, beispielsweise drei oder vier, flächige Halbzeuge erhält. Das Aufschneiden des Kunststoffvorformlings erfolgt in einer bevorzugten Ausführungsform vor dem Abtrennen von der Düse, also bereits während der Extrusion oder unmittelbar nach der Extrusion.

In einer weiteren besonders bevorzugten Ausführungsform wird der Kunststoffvorformling vor dem Schneiden mit Hilfe einer Spreizvorrichtung senkrecht zur Extrusionsrichtung gedehnt. Wird der schlauchförmige Vorformling nur einseitig aufgeschnitten, erhält man ein großflächiges Halbzeug, das über ein Tiefziehwerkzeug mit zwei Kammern für Ober- und Unterschale gelegt werden kann, so daß daraus zwei Halbschalen entstehen, welche anschließend voneinander getrennt und verschweißt werden. Vorzugsweise wird der schlauchförmige Vorformling an zwei Seiten aufgeschnitten, so daß zwei flächige Halbzeuge entstehen, welche jeweils in ein Tiefziehwerkzeug eingeformt werden. Weiterhin ist es erfindungsgemäß auch vorgesehen, den Vorformling in mehr als zwei Teile zu zerschneiden und gegebenenfalls das Fertigteil aus mehr als zwei Teilschalen zu fertigen.

Die so erhaltenen Kunststoffteile werden dann in einem Thermoformprozeß zu halbschalenartigen Halbzeugen weiterverarbeitet. Vorteilhafterweise können bereits vorhandene Coextrusionsblasformanlagen auch für das erfindungsgemäße Verfahren verwendet werden. Die Blasformanlagen müßten lediglich durch entsprechende Schneideeinheiten, bevorzugt Roboter, sowie Tiefzieheinheiten ergänzt werden, wobei es grundsätzlich auch möglich ist, die bereits vorhandenen Schließeinheiten der Blasformanlagen zum Tiefziehen, Komplettieren und Verschweißen einzusetzen.

Es ist erfindungsgemäß vorgesehen, daß für einzelne Arbeitsschritte des Verfahrens, insbesondere für das Abtrennen, den Transport und das Schneiden des Kunststoffvorformlings Roboter eingesetzt werden.

Aufgrund der hohen Beanspruchung des Kunststoffmaterials und der hohen Anforderungen, beispielsweise hinsichtlich der Barrierewirkung, sind die nach dem erfindungsgemäßen Verfahren hergestellten Kunststoffhohlkörper vorzugsweise aus mehreren Schichten aufgebaut.

Bevorzugt sind die erfindungsgemäßen Kunststoffhohlkörper aus mindestens zwei Schichten aufgebaut. Bei diesen Schichten handelt es sich stets im eine tragende Basisschicht, welche üblicherweise die Innenoberfläche des Hohlkörpers bildet. Diese Schicht ist somit für die Dichtigkeit und mechanische Stabilität des Behälters von entscheidender Bedeutung.

In einer besonderen Ausführungsform weist der hergestellte Kunststoffvorformling mindestens eine Schicht aus polymerem Material, vorzugsweise ausgewählt aus der Gruppe umfassend Polyethylen, Polypropylen Polyvinylchlorid, Polyamid, Polyketon, Polyester und/oder Mischungen davon, auf.

In einer weiteren bevorzugten Ausführungsform ist der Kunststoffvorformling aus mehreren Schichten aufgebaut, umfassend vorzugsweise Basisschicht, Mahlgutschicht, Haftvermittlerschicht und/oder Barriereschicht.

Die Schichtdickenverteilung innerhalb des Fertigteils und somit des Vorformlings hängt von der Anzahl der Schichten ab. Die Schichtdickenverteilung in einem nach dem erfindungsgemäßen Verfahren hergestellten Kunststoffvorformling, welcher aus sechs Schichten aufgebaut ist, ist nachfolgend angegeben. In einer besonders bevorzugten Ausführungsform wird ein Kunststoffvorformling bzw. ein Kunststoffhohlkörper hergestellt, der aus sechs Schichten aufgebaut ist, umfassend von außen nach innen:
eine Schicht aus HDPE mit einer Dicke von 5 bis 30 %,
eine Mahlgutschicht mit einer Dicke von 10 bis 82 %,
eine Haftvermittlerschicht mit einer Dicke von 1 bis 5 %,
eine Barriereschicht mit einer Dicke von 1 bis 10 %,
eine Haftvermittlerschicht mit einer Dicke von 1 bis 5 %,
eine Schicht aus HDPE mit einer Dicke von 10 bis 40 %,
jeweils bezogen auf die Gesamtdicke der Behälterwand.

Geeignete Basismaterialien umfassen hochdichtes Polyethylen (HDPE) mit einer Dichte von 0,940 bis 0,960 g/cm³, insbesondere 0,943 bis 0,955 g/cm³ und insbesondere bevorzugt von 0,943 bis 0,950 g/cm³. Die Schmelzfließrate der erfindungsgemäß geeigneten Polyethylenmaterialien beträgt zwischen 1,5 und 20 g/10 min (MFR (190°C/21,6kg)) insbesondere zwischen 2 und 10 g/10 min und besonders bevorzugt zwischen 3 und 8 g/ 10 min. Selbstverständlich eignen sich auch andere, bereits genannte polymere Materialien als tragendes Basismaterial.

Geeignete Barrierematerialien umfassen Ethylenvinylalkohol-Copolymerisat (EVOH), Polyamid oder auch andere Barrierepolymere wie Polyester, insbesondere Polybutylentherephthalat, Fluorpolymere, wie Polyvinylidenfluorid, Ethylen-Tetrafluoroethylen-Copolymerisat (ETFE), Tetrafluoroethylen-Hexafluoropropylen-Vinylidenfluorid-Copolymerisat (THV) sowie flüssigkristalline Polymere (LCP). Weiterhin geeignet sind auch Mischungen der vorgenannten Barrierematerialien mit sogenannten Nanopartikeln. Nanopartikel gemäß der vorliegenden Erfindung sind anorganische Schichtsilikate deren atomare Schichten durch eingelagerte organische Moleküle aufgeweitet und damit aufgelockert sind. Durch Einarbeiten in polymere Werkstoffe können die atomaren Schichten getrennt werden, wodurch eine extrem feine Verteilung der Partikel bewirkt wird. Die Oberfläche der dispergierten Partikel bewirkt eine extreme Verlängerung des Diffusionsweges eines ggf. permeierenden Moleküls, wodurch die Permeation reduziert wird.

Erfindungsgemäß geeignete Haftvermittler umfassen polarmodifizierte Polyethylene (HDPE oder LLDPE und LDPE). Die Polarmodifizierung erfolgt üblicherweise durch Pfropfcopolymerisation mit polaren Molekülen mit C=C-Doppelbindungen, wie etwa Fumarsäure, Maleinsäure oder auch Maleinsäureanhydrid. Die gepfropften Polyethylene können in nachfolgenden Reaktionen zusätzlich chemisch modifiziert werden, beispielsweise durch Einbringung von Aminogruppen. Darüber hinaus eignen sich auch Copolymerisate des Ethylens mit Vinylacetat, Acrylsäure bzw. deren Ester prinzipiell als Haftvermittler.

Die sogenannte Mahlgutschicht wird vorzugsweise aus sogenannten Butzen erzeugt, die beispielsweise bei der Herstellung der Kunststoffhohlkörper als Restmaterialien bzw. Produktionsreste anfallen.

In einer weiteren bevorzugten Ausführungsform ist erfindungsgemäß vorgesehen, daß der Kunststoffhohlkörper nach dem Verschweißen der beiden thermogeformten Halbzeuge mit einer zusätzlichen permeationsmindernden Beschichtung versehen wird. Die permeationsmindernde Beschichtung kann beispielsweise mittels Direktfluorierung, Lackierung oder Plasmapolymerisation der Kunststoffbehälter erhalten werden.

Es wird ausdrücklich darauf hingewiesen, daß im folgenden das erfindungsgemäße Verfahren lediglich beispielhaft hinsichtlich der möglichen Ausführungsformen beschrieben wird. Erfindungsgemäß sind noch weitere Ausführungsformen vorgesehen, welche ebenfalls das erfindungsgemäße Verfahrensprinzip aufweisen.

Im ersten Schritt des erfindungsgemäßen Verfahrens wird zunächst ein Kunststoffvorformling hergestellt. Dies kann beispielsweise in einer 6-Schicht-Coextrusionsblasformanlage, wie sie von der Firma Krupp Kautex Maschinenbau hergestellt und vertrieben wird, durchgeführt werden. Man erhält bei der Coextrusion einen schlauchförmigen, aus sechs Schichten aufgebauten Vorformling. Der Schichtaufbau des Vorformlings entspricht dem bereits beschriebenen Aufbau (von außen nach innen: HDPE, Mahlgut, Haftvermittler, Barrierepolymer, Haftvermittler, HDPE). Die Schichtdikkenverteilung des Vorformlings liegt ebenfalls in den bereits angegebenen Bereichen.

Die Vorformlingswanddicke wird bei der Coextrusion der Geometrie des Fertigteils so angepaßt, daß im Fertigteil eine möglichst homogene Wanddickenverteilung ohne Dünnstellen erzeugt wird. Die Vorformlingswanddicke wird hierbei durch ein geeignetes Programm, welches den zeitlichen Verlauf des Düsenspalts regelt (WDS), und ggf. auch durch radiale Steuerung des Düsenspalts (PWDS) reguliert. Die Wanddickenverteilung regelt sich nach den Anforderungen an das mechanische Verhalten des Materials sowie bei Kunststoffkraftstoffbehältern auch nach dem geforderten Verhalten im Brandfalle. Der Durchmesser bzw. der Umfang des Vorformlingsschlauches wird den Erfordernissen des Werkzeugs angepaßt und läßt sich problemlos über die Wahl des Düsendurchmessers festlegen.

Der Kunststoffvorformling wird bis zu einer solchen Länge extrudiert, wie sie für das jeweilige Werkzeug erforderlich ist. Es ist erfindungsgemäß vorgesehen, daß der Vorformling über eine geeignete Spreizvorrichtung extrudiert werden kann, die im einfachsten Falle aus zwei senkrecht montierten Stangen besteht, welche beispielsweise hydraulisch voneinander weg bewegt werden können. Werden die beiden parallel oder auch schräg zueinander angeordneten Stangen, die sich im Innenraum des Vorformlingsschlauches befinden, voneinander weg bewegt, so erfährt die Schmelze über die gesamte Länge des Vorformlingsschlauches eine Dehnung senkrecht zur Extrusionsrichtung. Selbstverständlich läßt sich die vorbeschriebene Spreizvorrichtung auch mehrteilig konstruieren, so daß der Vorformlingsschlauch in axialer Richtung gezielt unterschiedlichen Dehnungen bzw. Spreizungen unterworfen werden kann. Die Bearbeitung mit Hilfe einer Spreizvorrichtung bietet nicht nur die Möglichkeit, den coextrudierten Schlauch gezielt vorzuformen, sondern darüber hinaus die Wanddicke des Vorformlings über diesen Spreizvorgang zu steuern.

Der so erhaltene Kunststoffvorformling wird unterhalb der Düse des Extrusionskopfes abgetrennt. Anschließend wird der in der Spreizvorrichtung aufgespannte und gehaltene schmelzeförmige Vorformling aus dem Bereich der Vorformlingsextrusion herausgeschwenkt, um im nächsten Arbeitsschritt an zumindest zwei den Erfordernissen der nachfolgenden Verfahrensschritten und des Fertigteils angepaßten Linien aufgeschnitten zu werden. Hierzu werden zu beiden Seiten des Vorformlings Halterungsvorrichtung an den Kunststoffvorformling herangeführt, welche die nach dem Schneiden anfallenden Hälften des Vorformlings festhalten und positionieren können. Beispielsweise geeignete Halterungsvorrichtungen sind Saugnäpfe. Das Abtrennen und der Transport von Schmelzschläuchen ist ein im Stand der Technik bekannter Prozeßschritt und wird beispielsweise in der EP 0 653 286 ausführlich beschrieben. Das Zerteilen des Kunststoffvorformlings in axialer Richtung erfolgt vorzugsweise mit Robotern, die eine dreidimensionale Steuerung der Schneidewerkzeuge ermöglichen. Auf diese Weise kann die Flächenform des Halbzeugs an den Kantenverlauf des Tiefziehwerkzeugs angepaßt werden, wodurch der anfallende Butzenanteil minimiert werden kann. Wahlweise kann der Schmelzeschlauch auch bereits während der Extrusion oder aber unmittelbar anschließend noch vor der Abtrennung von der Düse in axialer Richtung aufgeschnitten werden. Erfolgt das Aufschneiden während der Extrusion kann das flächige Halbzeug seinerseits quer zur Extrusionsrichtung gereckt werden.

Die nunmehr erhaltenen zumeist plattenförmigen, flächigen Halbzeuge werden im nächsten Schritt an die beiden vorzugsweise sich gegenüberliegenden Tiefziehwerkzeuge herangeführt. Dies kann ebenfalls durch Roboter geschehen. Die Tiefziehwerkzeuge weisen gegebenenfalls unterschiedliche Formen auf, beispielsweise für das Ober- bzw. Unterteil des zu fertigenden Kunststoffhohlkörpers. Durch Anlegen von Unterdruck werden die schmelzeförmigen Halbzeuge in das Tiefziehwerkzeug eingesogen, wobei durch ein entsprechendes Druck-Zeitprofil die multiaxiale Ausdehnung der Schmelze und somit auch die Wanddickenverteilung in den zu fertigenden Halbschalen weiter optimiert werden kann.

Nach dem Einformen der Halbzeuge in die Tiefziehwerkzeuge werden ggf. Einbauteile in die Halbschalen montiert. Bei der Fertigung eines Kunststoffkraftstoffbehälters können beispielsweise Lüftungsleitungen für den Druckausgleich innerhalb des Tanks, Kraftstoffleitungen für den Flüssigkeitsausgleich innerhalb des Tanks, Ventile, Schwalltöpfe, Pumpen- und/oder Tankgebermodule beim Betanken in die Tankhalbschalen eingelegt und mit der noch schmelzewarmen Innenoberfläche verschweißt werden. Auch für diesen Prozeß werden vorzugsweise Roboter eingesetzt. Im letzten Fertigungsschritt werden die beiden noch in den Werkzeugen befindlichen Halbschalen aufeinandergeführt und miteinander durch Zusammendrücken der beiden Werkzeuge verschweißt. Dabei wird der auf den Stirnflächen der Werkzeughälften aufliegende Teil der beiden Halbzeuge miteinander in Kontakt gebracht und verschweißt. Die Werkzeuge und ihre Schließbewegungen sind so zu gestalten, daß beim Verpressen der Halbschalen während des Schweißvorgangs Material in geeignete Kammern fließen kann, so daß die Schweißnahtgeometrie den Erfordernissen der Bauteilfestigkeit sowie der Dichtigkeit gegenüber Kraftstoffpermeation angepaßt werden kann. Nach dem Fügeprozeß wird der Tank unter Einhaltung verfahrenstechnisch erforderlicher Kühlzeiten entformt.

## Patentansprüche

1. Verfahren zur Herstellung von Kunststoffhohlkörpern, welches die folgenden Schritte umfaßt:
a) Herstellen eines schlauchförmigen Kunststoffvorformiings in einer Blasform- oder Coextrusionsblasformanlage, wobei eine gezielte Wanddickensteuerung des Kunststoffvorformlings vorgenommen wird,
b) Aufschneiden des extrudierten oder coextrudierten Kunststoffvorformlings zu wenigstens zwei flächigen Halbzeugen,
c) Tiefziehen der erhaltenen flächigen Halbzeuge zu Halbschalen,
d) Verschweißen der thermogeformten Halbschalen zu einem Hohlkörper, wobei das Verschweißen der thermogeformten Halbschalen aus der Tiefziehwärme erfolgt.

2. Verfahren nach Anspruch 1, **dadurch gekennzeichnet, daß** vor dem Verschweißen der thermogeformten Halbschalen Einbauteile an der Innenseite der Halbschale angebracht werden.

3. Verfahren nach Anspruch 2, **dadurch gekennzeichnet, daß** die Einbauteile Lüftungsleitungen für den Druckausgleich innerhalb des Tanks, Kraftstoffleitungen für den Flüssigkeitsausgleich innerhalb des Tanks, Ventile, Schwalltöpfe, Pumpen- und/oder Tankgebermodule sind.

4. Verfahren nach einem der vorhergehenden Ansprüche, **dadurch gekennzeichnet, daß** das Verfahren ohne zusätzliche Aufheiz- oder Abkühlschritte abläuft.

5. Verfahren nach einem der vorhergehenden Ansprüche, **dadurch gekennzeichnet, daß** der schlauchförmige Kunststoffvorformling vor dem Schneiden mit Hilfe einer Spreizvorrichtung senkrecht zur Extrusionsrichtung gedehnt wird.

6. Verfahren nach einem der Ansprüche 1 bis 5, **dadurch gekennzeichnet, daß** das Schneiden des Kunststoffvorformlings vor der Abtrennung von der Düse, also bereits während der Extrusion oder unmittelbar anschließend erfolgt.

7. Verfahren nach Anspruch 6, **dadurch gekennzeichnet, daß** die flächigen Halbzeuge quer zur Extrusionsvorrichtung gereckt werden.

8. Verfahren nach einem der vorhergehenden Ansprüche, **dadurch gekennzeichnet, daß** der Kunststoffvorformling mindestens eine Schicht aus polymeren Material aufweist, vorzugsweise ausgewählt aus der Gruppe umfassend Polyethylen, Polypropylen, Polyvinylchlorid, Polyamid, Polyketon, Polyester und/oder Mischungen davon.

9. Verfahren gemäß einem der vorhergehenden Ansprüche, **dadurch gekennzeichnet, daß** der Kunststoffvorformling aus mehreren Schichten aufgebaut ist, umfassend vorzugsweise Basisschicht, Mahlgutschicht, Haftvermittlerschicht und/oder Barriereschicht

10. Verfahren gemäß einem der vorhergehenden Ansprüche, **dadurch gekennzeichnet, daß** der Kunststoffvorformling aus mehreren Schichten aufgebaut ist, umfassend von außen nach innen:
- eine Schicht aus HDPE mit einer Dicke von 5 bis 30%,
- eine Mahlgutschicht mit einer Dicke von 10 bis 82%,
- eine Haftvermittlerschicht mit einer Dicke von 1 bis 5%,
- eine Barriereschicht mit einer Dicke von 1 bis 10%,
- eine Haftvermittlerschicht mit einer Dicke von 1 bis 5%,
- eine Schicht aus HDPE mit einer Dicke von 10 bis 40%, jeweils bezogen auf die Gesamtdicke der Behälterwand.

## Claims

1. A process for producing hollow plastic articles, comprising the following steps:
a) producing a tubular plastic parison on a blow molding plant or coextrusion blow molding plant with controlled wall-thickness regulation of the plastic parison
b) cutting open the extruded or coextruded plastic parison to give at least two semifinished open-surface products
c) thermoforming the resultant semifinished open-surface product to give half-shells
d) welding the thermoformed half-shells to give a hollow article, the welding of the thermoformed half-shells being effected using the heat of thermoforming.

2. The process according to claim 1, wherein, prior to the welding of the thermoformed half-shells, incorporated parts are attached to the inner side of the half-shell.

3. The process according to claim 2, wherein the incorporated parts are ventilation lines for pressure equilibration within the tank, fuel lines for equilibration of liquid within the tank, valves, anti-surge cups, or pump-related and/or tank sensor modules.

4. The process according to any of the preceding claims, which proceeds without any additional heating steps or cooling steps.

5. The process according to any of the preceding claims, wherein, prior to the cutting process, the tubular plastic parison is extended perpendicularly to the direction of extrusion, with the aid of a spreading device.

6. The process according to any of claims 1 to 5, wherein the cutting of the plastic parison takes place prior to separation from the die, i.e. straight away during the extrusion process or immediately following the same.

7. The process according to claim 7, wherein the semifinished open-surface products are stretched perpendicularly to the extrusion device.

8. The process according to any of the preceding claims, wherein the plastic parison has at least one layer made from polymeric material, preferably selected from the group comprising polyethylene, polypropylene, polyvinyl chloride, polyamide, polyketone, polyester, and mixtures of these.

9. The process according to any of the preceding claims, wherein the structure of the plastic parison has two or more layers, encompassing preferably base layer, regrind layer, adhesion-promoter layer, and/or barrier layer.

10. The process according to any of the preceding claims, wherein the structure of the plastic parison has two or more layers, comprising, from the outside to the inside:
- a layer made from HDPE with a thickness of from 5 to 30%,
- a regrind layer with a thickness of from 10 to 82%,
- an adhesion-promoter layer with a thickness of from 1 to 5%,
- a barrier layer with a thickness of from 1 to 10%,
- an adhesion-promoter layer with a thickness of from 1 to 5%, and
- a layer made from HDPE with a thickness of from 10 to 40%, based in each case on the total thickness of the container wall.

## Revendications

1. Procédé en vue de la fabrication de corps creux en matière synthétique, qui comprend les étapes suivantes :
a) fabrication d'une ébauche en matière synthétique sous forme tubulaire dans une installation de moulage par soufflage ou de moulage par soufflage avec co-extrusion, une commande ciblé de l'épaisseur de paroi de l'ébauche en matière synthétique étant effectuée,
b) découpage de l'ébauche en matière synthétique extrudée ou co-extrudée pour former au moins deux produits semi-finis plats,
c) emboutissage profond des produit semi-finis plats obtenus pour former des semi-coupelles,
d) soudure des semi-coupelles thermoformées pour former un corps creux, la soudure des semi-coupelles thermoformées se faisant à partir de la chaleur d'étirage.

2. Procédé selon la revendication 1, **caractérisé en ce qu'**avant la soudure des semi-coupelles thermoformées, on dispose des pièces de montage sur la face interne des semi-coupelles.

3. Procédé selon la revendication 2, **caractérisé en ce que** les pièces de montage sont des conduits de ventilation pour l'équilibrage de la pression au sein de la citerne, des conduits de carburant pour l'équilibrage de liquide au sein de la citerne, des vannes, des pots de brise-jet, des modules de pompes et/ou de sondes de citernes.

4. Procédé selon l'une quelconque des revendications précédentes, **caractérisé en ce que** le procédé se déroule sans étapes supplémentaires d'échauffement ou de refroidissement.

5. Procédé selon l'une quelconque des revendications précédentes, **caractérisé en ce que** l'ébauche en matière synthétique sous forme tubulaire est étirée, perpendiculairement à la direction d'extrusion, avant le découpage, à l'aide d'un dispositif d'écartement.

6. Procédé selon l'une quelconque des revendications 1 à 5, **caractérisé en ce que** le découpage de l'ébauche en matière synthétique se fait avant la séparation de la buse, par conséquent, déjà pendant l'extrusion ou immédiatement à la suite de celle-ci.

7. Procédé selon la revendication 7, **caractérisé en ce que** les produits semi-finis plats sont étirés perpendiculairement à la direction d'extrusion.

8. Procédé selon l'une quelconque des revendications précédentes, **caractérisé en ce que** l'ébauche en matière synthétique présente au moins une couche en matériau polymère, sélectionnée, de préférence, du groupe comprenant le polyéthylène, le polypropylène, le chlorure de polyvinyle, le polyamide, le polycétone, le polyester et/ou des mélanges de ces derniers.

9. Procédé selon l'une quelconque des revendications précédentes, **caractérisé en ce que** l'ébauche en matière synthétique est constituée de plusieurs couches, comprenant, de préférence, une couche de base, une couche de mouture, une couche d'agent promoteur de l'adhésion et/ou une couche barrière.

10. Procédé selon l'une quelconque des revendications précédentes, **caractérisé en ce que** l'ébauche en matière synthétique est constituée de plusieurs couches, comprenant, de l'extérieur à l'intérieur :
• une couche en HDPE ayant une épaisseur de 5 à 30%,
• une couche de mouture ayant une épaisseur de 10 à 82%,
• une couche d'agent promoteur de l'adhésion ayant une épaisseur de 1 à 5%,
• une couche barrière ayant une épaisseur de 1 à 10%,
• une couche d'agent de promoteur de l'adhésion ayant une épaisseur de 1 à 5%,
• une couche en HDPE ayant une épaisseur de 10 à 40%, à chaque fois par rapport à l'épaisseur totale de la paroi du récipient.
